# EUROPEAN PATENT APPLICATION

(11) **EP 3 636 593 A1**
(43) Date of publication of application: **15.04.2020**
(21) Application number: 18813990.1
(22) Date of filing: 04.06.2018
(51) Int. Cl.: C01B 32/225, H01M 4/139, H01M 4/62

(54) **CARBON MATERIAL-CONTAINING DISPERSION LIQUID, SLURRY FOR ELECTRODE FORMATION, AND METHOD FOR PRODUCING ELECTRODE FOR NONAQUEOUS ELECTROLYTE SECONDARY BATTERIES**

(30) Priority: 05.06.2017 JP 2017110627; 05.06.2017 JP 2017110628
(71) Applicant: Sekisui Chemical Co., Ltd., Osaka-shi, Osaka 530-8565 (JP)
(72) Inventor: MASUDA, Hiroki, Mishima-gun Osaka 618-0021 (JP); SAWADA, Yuuki, Mishima-gun Osaka 618-0021 (JP); NAKASUGA, Akira, Mishima-gun Osaka 618-0021 (JP); FUJIWARA, Akihiko, Mishima-gun Osaka 618-0021 (JP)
(74) Representative: Ter Meer Steinmeister & Partner
(86) International application number: PCT/JP2018/021325
(87) International publication number: WO 2018/225670

(57) **Abstract**

Provided is a carbon material-containing dispersion liquid that is excellent in dispersibility when used as a slurry for electrode formation of a secondary battery, and is capable of enhancing the battery characteristics such as output characteristics of the secondary battery. A carbon material-containing dispersion liquid includes a carbon material and a dispersion medium for the carbon material. In the carbon material-containing dispersion liquid, a concentration of the carbon material in the carbon material-containing dispersion liquid is 0.01% by weight or more and 20% by weight or less, and a light transmittance at a wavelength of 650 nm of a supernatant of the carbon material-containing dispersion liquid when the carbon material-containing dispersion liquid is left to stand at 25°C for 24 hours after preparation is 1% or more and 60% or less.

## Description

### TECHNICAL FIELD

The present invention relates to a carbon material-containing dispersion liquid containing a carbon material and a dispersion medium for the carbon material, a slurry for electrode formation using the carbon material-containing dispersion liquid, and a method for producing an electrode for nonaqueous electrolyte secondary batteries.

### BACKGROUND ART

Recently, research and development of nonaqueous electrolyte secondary batteries are actively conducted for applications to mobile devices, hybrid automobiles, electric automobiles, and home energy storage. In particular, a nonaqueous electrolyte secondary battery having a long service life and capable of charging and discharging at a large current is required for hybrid automobiles and electric automobiles.

However, when a nonaqueous electrolyte secondary battery is charged and discharged at a large current, the nonaqueous electrolyte secondary battery itself can generate heat and result in thermal runaway. This heat generation is considered to be caused by largeness of the resistance in the positive electrode of the nonaqueous electrolyte secondary battery.

In order to reduce the resistance in the positive electrode of the nonaqueous electrolyte secondary battery, a method of adding a carbon material such as carbon black or graphite as a conductive auxiliary agent is known. However, when the carbon material as described above is used, it is extremely difficult to mix and disperse the carbon material in the slurry for positive electrode. Therefore, a uniform conductive network is not formed in the positive electrode, and this can lead increase in the positive electrode resistance.

The following Patent Document 1 discloses an electrode for lithium secondary batteries, including a carbon-coated lithium transition metal oxide produced by coating the surface of a lithium transition metal oxide (positive electrode active material) with a carbon material, and a binder. Patent Document 1 indicates that dispersibility of the lithium transition metal oxide and carbon can be improved by using the carbon-coated lithium transition metal oxide.

Also, Patent Document 2 discloses a method of adding a negative electrode active material, a conductive agent and a binder into a solvent in the presence of a surfactant, and kneading and dispersing these ingredients. Patent Document 2 indicates that the negative electrode active material, the conductive agent, and the binder can be uniformly dispersed by using the surfactant.

### Related Art Document

### Patent Document

Patent Document 1: JP 2003-308845A
Patent Document 2: JP H8-190912A

### SUMMARY OF THE INVENTION

### PROBLEMS TO BE SOLVED BY THE INVENTION

However, when the surface of the positive electrode active material is coated with a carbon material as described in Patent Document 1, it is necessary to knead the positive electrode active material and the carbon material for a long time, resulting in the problem of inefficiency. When the kneading is insufficient, an agglomerate can remain on the surface of the positive electrode active material. In such a case, a part having high conductivity and a part having low conductivity are locally formed inside the positive electrode, so that a uniform conductive network sometimes cannot be formed. When a uniform conductive network cannot be formed, the positive electrode active material fails to sufficiently function in the secondary battery, resulting that battery characteristics such as output characteristics can deteriorate.

When the surfactant is used as in Patent Document 2, dispersibility particularly in the organic solvent having a lower dielectric constant than water can be insufficient. Also, since the adsorbing power to a carbon material such as carbon black is weak, it is necessary to increase the adding amount so as to achieve excellent dispersibility. As a result, the amount of the active material in the secondary battery reduces, and the battery characteristics such as the battery capacity and the output characteristics can deteriorate.

It is an object of the present invention to provide a carbon material-containing dispersion liquid exhibiting excellent dispersibility when used as a slurry for electrode formation in a secondary battery, and capable of enhancing the battery characteristics such as output characteristics of the secondary battery, and a slurry for electrode formation using the carbon material-containing dispersion liquid, and a method for producing an electrode for nonaqueous electrolyte secondary batteries.

### MEANS FOR SOLVING THE PROBLEMS

As a result of diligent efforts for solving the aforementioned problems, the present inventors have found that it is possible to enhance the battery characteristics of a secondary battery by setting a light transmittance at a wavelength of 650 nm of the supernatant within a specific range when a carbon material-containing dispersion liquid having a concentration of a carbon material within a specific range is left to stand at 25°C for 24 hours after preparation, and accomplished the present invention.

That is, the carbon material-containing dispersion liquid according to the present invention is a carbon material-containing dispersion liquid containing a carbon material and a dispersion medium for the carbon material, a concentration of the carbon material in the carbon material-containing dispersion liquid is 0.01% by weight or more and 20% by weight or less, and a light transmittance at a wavelength of 650 nm of a supernatant of the carbon material-containing dispersion liquid when the carbon material-containing dispersion liquid is left to stand at 25°C for 24 hours after preparation is 1% or more and 60% or less.

In a specific aspect of the carbon material-containing dispersion liquid according to the present invention, the dispersion medium has a viscosity at 25°C of 0.89 mPa•s or more and 1.89 mPa•s or less.

In another specific aspect of the carbon material-containing dispersion liquid according to the present invention, the dispersion medium is water or N-methyl-2-pyrrolidone.

In a still another specific aspect of the carbon material-containing dispersion liquid according to the present invention, the carbon material has a graphite structure, and has a structure in which graphite is partially exfoliated.

In a yet still another specific aspect of the carbon material-containing dispersion liquid according to the present invention, the carbon material has a mean particle diameter of 1 µm or more and 40 µm or less.

In a further specific aspect of the carbon material-containing dispersion liquid according to the present invention, a ratio y/x of a methylene blue adsorption y (µmol/g) per 1 g of the carbon material that is determined based on a difference between an absorbance of a 10 mg/L methylene blue solution in methanol and an absorbance of a supernatant obtained by introduction of the carbon material into the methylene blue solution in methanol, followed by centrifugal separation, and a BET specific surface area x (m²/g) of the carbon material is 0.15 or more.

In a further specific aspect of the carbon material-containing dispersion liquid according to the present invention, a peak intensity ratio D/G of a D band and G band in a Raman spectrum of the carbon material falls within a range of 0.05 or more and 0.8 or less.

In a further specific aspect of the carbon material-containing dispersion liquid according to the present invention, a particle concentration of the carbon material when a 20 ppm solution of the carbon material in N-methyl-2-pyrrolidone is measured by a flow-type particle image analyzer is 10,000 particles/µL or more and 200,000 particles/µL or less.

In a further specific aspect of the carbon material-containing dispersion liquid according to the present invention, a dispersibility imparting agent composed of a polyvinyl acetal resin and/or a polyvinylidene fluoride resin is further included.

In a further specific aspect of the carbon material-containing dispersion liquid according to the present invention, a ratio B/(A + B) where A represents a weight of the carbon material and B represents a weight of the dispersibility imparting agent, falls within a range of 0.001 or more and 0.15 or less.

A slurry for electrode formation according to the present invention is a slurry for electrode formation for use in forming an electrode of a nonaqueous electrolyte secondary battery, and includes the carbon material-containing dispersion liquid constituted in accordance with the present invention, an active material, and a binder.

In a specific aspect of the slurry for electrode formation according to the present invention, when the carbon material contained in the carbon material-containing dispersion liquid is set as a first carbon material, a second carbon material that is a different carbon material from the first carbon material, and lacks a structure in which graphite is partially exfoliated is further included. Preferably, the second carbon material is at least one selected from the group consisting of graphene oxide, a particulate graphite compound, a fibrous graphite compound, and carbon black.

A method for producing an electrode for nonaqueous electrolyte secondary batteries according to the present invention includes a step of preparing the slurry for electrode formation constituted in accordance with the present invention, and a step of forming an electrode by applying the slurry for electrode formation on a collector foil substrate, and drying the slurry for electrode formation.

### EFFECT OF THE INVENTION

According to the present invention, it is possible to provide a carbon material-containing dispersion liquid that is excellent in dispersibility when used as a slurry for electrode formation of a secondary battery, and is capable of enhancing the battery characteristics such as output characteristics of the secondary battery.

### MODE(S) FOR CARRYING OUT THE INVENTION

Hereinafter, the details of the present invention will be described.

### [Carbon material-containing dispersion liquid]

A carbon material-containing dispersion liquid according to the present invention includes a carbon material, and a dispersion medium for the carbon material. A concentration of the carbon material in the carbon material-containing dispersion liquid is 0.01% by weight or more and 20% by weight or less. When the carbon material-containing dispersion liquid is left to stand at 25°C for 24 hours after preparation, a supernatant of the carbon material-containing dispersion liquid has a light transmittance at a wavelength of 650 nm of 1% or more and 60% or less.

Since the carbon material-containing dispersion liquid of the present invention has the aforementioned configuration, the carbon material-containing dispersion liquid is excellent in dispersibility when it is used as a slurry for electrode formation of a secondary battery. Therefore, when an electrode of a secondary battery is formed by using a slurry for electrode formation containing the carbon material-containing dispersion liquid of the present invention, a uniform conductive network can be formed. Accordingly, it is possible to enhance the battery characteristics such as output characteristics of the secondary battery.

Light transmittance can be measured, for example, by using a visible and ultraviolet spectrophotometer. Specifically, 50 mL of the carbon material-containing dispersion liquid is put into a reagent bottle, and left to stand at 25°C for 24 hours after preparation. After leaving to stand, a supernatant of the carbon material-containing dispersion liquid is collected with a polyethylene dropping pipette, or pipette. The collected supernatant is loaded in a cell having an optical path length of 10 mm, and light transmittance at a wavelength of 650 nm is measured with a visible and ultraviolet spectrophotometer. The supernatant means the upper 20% of the height in the height from the bottom surface of the glass reagent bottle (bore inner diameter ϕ29 mm, barrel diameter 45 mm, height 81.5 mm) to the liquid level of the carbon material-containing dispersion liquid.

The lower the light transmittance of the carbon material-containing dispersion liquid measured in the manner as described above, the better the dispersibility is meant. On the other hand, as the light transmittance increases, the carbon material sediments, meaning that the dispersibility is poor.

The light transmittance is preferably 10% or more, more preferably 15% or more, and is preferably 30% or less, more preferably 20% or less. When the light transmittance falls within the above range, it is possible to further improve the dispersibility of the carbon material, and it is possible to further enhance the battery characteristics of the secondary battery. The lower limit value of the light transmittance is 1% from the viewpoint of the measurement accuracy of the light transmittance.

A light transmittance at a wavelength of 650 nm when the carbon material-containing dispersion liquid is left to stand at 25°C for 1 minute after preparation is indicated by a%. A light transmittance at a wavelength of 650 nm when the carbon material-containing dispersion liquid is left to stand at 25°C for 24 hours after preparation is indicated by b%. A variation (b-a) in light transmittance is preferably 0% or more, more preferably 5% or more, further preferably 10% or more, and is preferably 60% or less, more preferably 25% or less, further preferably 15% or less. When the variation (b-a) falls within the above ranges, it is possible to further improve the dispersibility of the carbon material, and it is possible to further enhance the battery characteristics of the secondary battery. The smaller the variation (b-a), the better the dispersibility of the carbon material contained in the carbon material-containing dispersion liquid is meant. On the other hand, as the variation (b-a) increases, the carbon material sediments on the bottom face of the reagent bottle, meaning that the dispersibility is poor. Light transmittance for determining a variation (b-a) can also be measured by a measuring method using a visible and ultraviolet spectrophotometer.

The concentration of the carbon material in the carbon material-containing dispersion liquid is preferably 0.5% by weight or more, more preferably 1% by weight or more, and is preferably 10% by weight or less. When the concentration of the carbon material is smaller than the aforementioned lower limit value, the amount of the dispersion medium in the carbon material-containing dispersion liquid is large, so that when the slurry for electrode formation is applied, a long time can be required for the applying step and the drying step. When the concentration of the carbon material is larger than the aforementioned upper limit value, the fluidity of the carbon material-containing dispersion liquid decreases, and the handleability can deteriorate.

The carbon material-containing dispersion liquid of the present invention may further include a dispersibility imparting agent in addition to the carbon material and the dispersion medium. The dispersibility imparting agent is composed of a polyvinyl acetal resin and/or a polyvinylidene fluoride resin.

When the dispersibility imparting agent composed of a polyvinyl acetal resin and/or a polyvinylidene fluoride resin is included, it is possible to disperse the carbon material in the dispersion medium more uniformly. Also, when a slurry further containing an electrode active material and a binder is prepared, and the prepared slurry is applied on a collector, an agglomerate is still less likely to be formed on the surface of the electrode. Therefore, it is possible to obtain a secondary battery having more excellent rate characteristics.

The polyvinyl acetal resin typically has a structural unit having a hydroxyl group, represented by the following formula (1), and a structural unit having an acetal group, represented by the following formula (2).

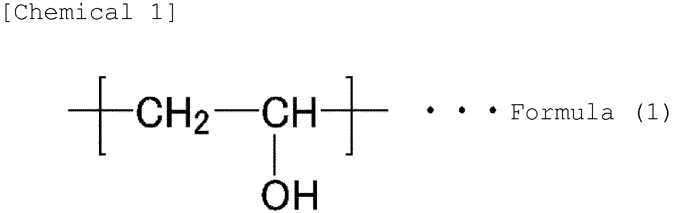

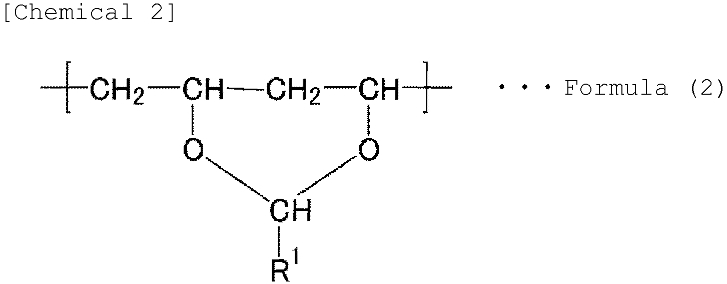

In the formula (2), R¹ represents a hydrogen atom, an alkyl group having 1 to 20 carbon atoms, an aryl group or an allyl group. R¹ is preferably an alkyl group having 1 carbon atom, or an alkyl group having 3 carbon atoms, and is more preferably an alkyl group having 3 carbon atoms.

The polyvinyl acetal resin in which the R¹ is an alkyl group having 1 carbon atom is obtained by acetalization with acetaldehyde. The polyvinyl acetal resin in which the R¹ is an alkyl group having 3 carbon atoms is obtained by acetalization with butyl aldehyde.

When the dispersibility imparting agent is further included as described above, an agglomerate is still less likely to be generated in preparation of an electrode, and a more uniform electrode can be formed. Therefore, the carbon material-containing dispersion liquid can be favorably used in forming an electrode having a large area. Therefore, this case permits further upsizing of a nonaqueous electrolyte secondary battery.

The carbon material-containing dispersion liquid of the present invention can be obtained, for example, by adding the carbon material into the dispersion medium, and dispersing by means of ultrasonication, a mixer, a jet mill, a stirrer or the like. Examples of the mixer used in mixing include, but are not particularly limited to, a planetary mixer, a Disper, a Thin-Film Spin System Mixer, a jet mixer, or a planetary centrifugal mixer.

In preparing the carbon material-containing dispersion liquid using the dispersibility imparting agent, the carbon material and the dispersibility imparting agent can be dispersed after adding the carbon material and the dispersibility imparting agent to the dispersion medium. After the carbon material is dispersed in the dispersion medium, a dispersibility imparting agent may further be added and dispersed. After the dispersibility imparting agent is dispersed in the dispersion medium, the carbon material may further be added and dispersed.

In the present invention, it is preferred that a particle concentration of the carbon material when a 20 ppm solution of the carbon material in N-methyl-2-pyrrolidone is measured by a flow-type particle image analyzer be 10,000 particles/µL or more and 200,000 particles/µL or less.

The particle concentration of the carbon material can be determined by imaging a static image of particles flowing in the flow cell for a 20 ppm solution of the carbon material in N-methyl-2-pyrrolidone, and measuring the particle concentration, for example, by using a flow-type particle image analyzer (FPIA-3000, available from Sysmex Corporation).

When the particle concentration is less than 10,000 particles/µL, a contact point with the active material cannot be sufficiently ensured when used in a secondary battery. As a result, an electron conductive path can become more difficult to be formed. When the particle concentration is more than 200,000 particles/µL, self-cohesion of the carbon material itself when used in a secondary battery can prevent connection between each of the active materials in the secondary battery. Therefore, the electron conductive path in the electrode is broken off, and the rate characteristics and the cycle characteristics can deteriorate.

Hereinafter, each material constituting the carbon material-containing dispersion liquid of the present invention is described in detail.

### (Carbon material)

Examples of the carbon material include graphite, and exfoliated graphite.

Graphite is a laminate of a plurality of graphene sheets. The number of lamination of graphene sheets in graphite is typically about 100000 layers to 1000000 layers. Examples of the graphite that can be used include natural graphite, artificial graphite and expanded graphite. In expanded graphite, the interlayer distance between graphene layers is larger than that of normal graphite. Therefore, it is preferred to use expanded graphite as the graphite.

Exfoliated graphite is obtained by exfoliation of the original graphite, and refers to a graphene sheet laminate that is thinner than the original graphite. The number of lamination of graphene sheets in exfoliated graphite only needs to be smaller than that of the original graphite.

In exfoliated graphite, the number of lamination of graphene sheets is preferably 1000 layers or less, more preferably 500 layers or less. When the number of lamination of graphene sheets is the upper limit or less, it is possible to further increase the specific surface area of exfoliated graphite.

It is preferred that the carbon material be a carbon material having a graphite structure and having a structure in which graphite is partially exfoliated. As the carbon material having a structure in which graphite is partially exfoliated, partially exfoliated graphite is recited. More specifically, "graphite is partially exfoliated" means that in a laminate of graphene, the interlayer distance between graphene layers are enhanced from the end edge to a certain inside position, namely, the graphite is partially exfoliated at the end edge. The expression also means that the graphite layer has a laminar structure in the center side part as with the original graphite or primary exfoliated graphite. Therefore, the part where the graphite is partially exfoliated at the end edge is contiguous with the center side part. The partially exfoliated graphite may include the one that is exfoliated by exfoliation of graphite at the end edge.

As described above, in the partially exfoliated graphite, the graphite layer has a laminar structure in the center side part as with the original graphite or primary exfoliated graphite. Therefore, the partially exfoliated graphite has a higher graphitization degree compared with conventional graphene oxide and carbon black, and is excellent in conductivity. Further, since the partially exfoliated graphite has such a structure that graphite is partially exfoliated, the partially exfoliated graphite has a large specific surface area. Therefore, for example, it is possible to further increase the area of the part being in contact with the active material. Therefore, since the electrode prepared by using the carbon material-containing dispersion liquid containing such carbon material is capable of reducing the resistance of the secondary battery, heat generation in the charging and discharging at a large current can be further suppressed.

Such partially exfoliated graphite can be obtained by preparing a composition containing graphite or primary exfoliated graphite, and a resin (polymer), the resin being immobilized to the graphite or the primary exfoliated graphite by grafting or adsorption, and thermally decomposing the resin in the composition. The resin contained in the composition is desirably removed, but a part of the resin may remain.

The distance between graphene layers in the graphite or the primary exfoliated graphite is extended by the thermal decomposition. More specifically, in a laminate of graphene such as graphite or primary exfoliated graphite, the graphene interlayer space is extended from the end edge to a certain inside position. That is, it is possible to obtain a structure in which graphite is partially exfoliated, and the graphite layer has a laminar structure in the center side part as with the original graphite or primary exfoliated graphite.

The graphite is a laminate of a plurality of graphene layers. Examples of the graphite that can be used include natural graphite, artificial graphite and expanded graphite. In expanded graphite, the interlayer distance between graphene layers is larger than that of normal graphite. Therefore, expanded graphite is easy to be laminated. Therefore, when expanded graphite is used, it is possible to obtain partially exfoliated graphite more easily.

The graphite has a number of lamination of graphene layers of 100000 layers or more to about 1000000 layers, and has a specific surface area by BET (BET specific surface area) of less than 25 m²/g. Since the primary exfoliated graphite is obtained by exfoliating graphite, the specific surface area may be larger than that of graphite.

In partially exfoliated graphite, the number of lamination of graphene layers in the part where graphite is partially exfoliated is preferably 5 layers or more and 3000 layers or less, more preferably 5 layers or more and 1000 layers or less, further preferably 5 layers or more and 500 layers or less.

When the number of lamination of graphene layers is less than the aforementioned lower limit, the number of lamination of graphene layers is small in the part where graphite is partially exfoliated, so that respective active materials in electrodes cannot be connected in application in a secondary battery. Therefore, the electron conductive path in the electrode is broken off, and the rate characteristics and the cycle characteristics can deteriorate. On the contrary, when the number of lamination of graphene layers is more than the aforementioned upper limit, the size of one partially exfoliated graphite is extremely large, so that distribution of partially exfoliated graphite inside the electrode can become uneven. Therefore, the electron conductive path in the electrode is undeveloped, and the rate characteristics and the cycle characteristics can deteriorate.

While the method for calculating the number of lamination of graphene layers is not particularly limited, it can be calculated by visual observation by TEM or the like.

Partially exfoliated graphite can be obtained through a first step of preparing a composition in which a resin is immobilized to graphite or primary exfoliated graphite by grafting or adsorption, and then a step of heat-treating the composition. The resin contained in the composition may be removed or a part of the resin may remain.

When the resin remains in the partially exfoliated graphite, the amount of the resin is preferably 1 part by weight or more and 350 parts by weight or less, more preferably 5 parts by weight or more and 100 parts by weight or less, further preferably 5 parts by weight or more and 50 parts by weight or less, relative to 100 parts by weight of the carbon material excluding the resin content. When the remaining resin amount is less than the aforementioned lower limit, a BET specific surface area cannot be always ensured. When the remaining resin amount is larger than the aforementioned upper limit, the production cost can increase.

The resin amount remaining in the partially exfoliated graphite can be calculated by measuring change in weight associated with the heating temperature, for example, by the thermogravimetric analysis (TG).

In the present invention, a resin-remaining type partially exfoliated graphite may be preliminarily prepared, and then a complex of the resin-remaining type partially exfoliated graphite and the active material may be formed, and then the resin may be removed. As the method for removing the resin, a heating treatment at a temperature that is higher than or equal to the decomposition temperature of the resin and lower than the decomposition temperature of the active material is preferred. The heating treatment may be carried out in an air atmosphere, in an inert gas atmosphere, in a low oxygen atmosphere or in vacuo.

The resin used for preparation of the composition in which the resin is immobilized to graphite or primary exfoliated graphite by grafting or adsorption is preferably, but is not particularly limited, a polymer of a radical polymerizing monomer. The radical polymerizing monomer may be a copolymer of a plurality of kinds of radical polymerizing monomers, or a homopolymer of one kind of radical polymerizing monomer.

Examples of such a resin include polypropylene glycol, polyglycidyl methacrylate, polyvinyl acetate, polyvinyl butyral, polyacrylic acid or polyethylene glycol.

As a method for producing partially exfoliated graphite, for example, a production method described in WO 2014/034156 A1 is recited. That is, partially exfoliated graphite is produced, for example, by a step of preparing a composition containing graphite or primary exfoliated graphite, and a resin (polymer), and a step of thermally decomposing (in open system) the resin in the prepared composition. The thermal decomposition may leave part of the resin, or may remove the resin completely.

In the above production method, since an oxidizing step is not conducted, the obtained partially exfoliated graphite is excellent in conductivity compared with the conventional graphene oxide and reduced graphene oxide obtained by reduction of the graphene oxide. It is considered that an sp2 structure cannot be sufficiently ensured in the conventional graphene oxide and reduced graphene oxide. Due to the excellent conductivity compared with the conventional graphene oxide and reduced graphene oxide, it is possible to further reduce the resistance of a nonaqueous electrolyte secondary battery having an electrode for nonaqueous electrolyte secondary batteries prepared with the obtained partially exfoliated graphite, and to further suppress the heat generation at the time of charging and discharging at a large current. Since the obtained carbon material has little active points on the surface, the electrolyte is more difficult to decompose as compared with the conventional graphene oxide. Therefore, when the obtained carbon material is used, it is possible to further suppress the generation of the gas.

The carbon material used in the present invention has a mean particle diameter (D₅₀) of preferably 0.1 µm or more, more preferably 1 µm or more, further preferably 5 µm or more, and is preferably 40 µm or less, more preferably 15 µm or less, further preferably 10 µm or less. When the mean particle diameter is less than the aforementioned lower limit, self-cohesion of the carbon material itself when used in a secondary battery can prevent connection between each of the active materials in the secondary battery. Therefore, the electron conductive path in the electrode is broken off, and the rate characteristics and the cycle characteristics can deteriorate. When the mean particle diameter is more than the aforementioned upper limit, the number of carbon materials in the electrode reduces, and a contact point with the respective active material cannot be sufficiently ensured in the secondary battery. As a result, an electron conductive path can become more difficult to be formed. The mean particle diameter (volume mean particle diameter) is a value calculated by volume-based distribution by a laser diffraction method using a laser diffraction scattering particle diameter distribution measuring apparatus.

It is preferred that the carbon material used in the present invention have a peak intensity ratio D/G of a D band and G band in a Raman spectrum obtained by the Raman spectroscopy of preferably 0.8 or less, and more preferably 0.7 or less. When the D/G ratio falls within this range, it is possible to further enhance the conductivity of the carbon material itself. It is preferred that the D/G ratio be 0.05 or more. When the D/G ratio is the aforementioned lower limit or more, it is possible to further suppress the electrolyte decomposition reaction on the carbon material when the carbon material is used in the electrode of the nonaqueous electrolyte secondary battery. As a result, it is possible to further improve the cycle characteristics of the secondary battery.

The BET specific surface area of the carbon material used in the present invention is preferably 25 m²/g or more because a contact point with the active material can be ensured more sufficiently. The BET specific surface area of the carbon material is preferably 35 m²/g or more, more preferably 45 m²/g or more because a contact point with the active material can be ensured still more sufficiently. Also from the viewpoint of further improving the handleability in preparation of an electrode, the BET specific surface area of the carbon material is preferably 2500 m²/g or less.

The carbon material used in the present invention has a ratio y/x of a methylene blue adsorption y (µmol/g) per 1 g of the carbon material, and a BET specific surface area x (m²/g) of the carbon material of preferably 0.15 or more, and more preferably 0.15 or more and 1.0 or less. The ratio y/x is further preferably 0.2 or more and 0.9 or less because adsorption between the active material and the carbon material proceeds more easily in preparation of a slurry for electrode formation as will be described later.

Methylene blue adsorption (µmol/g) is measured in the following manner. First, absorbance of a 10 mg/L methylene blue solution in methanol (blank) is measured. Next, an object to be measured (carbon material) is put into a methylene blue solution in methanol, and a supernatant obtained by centrifugal separation is measured for absorbance (sample). Lastly, the methylene blue adsorption (µmol/g) per 1 g is calculated from the difference between the absorbance (blank) and the absorbance (sample).

The methylene blue adsorption and the specific surface area determined by BET of the carbon material have correlation. In globular graphite particles that have been conventionally known, the BET specific surface area x (m²/g) and the methylene blue adsorption y (µmol/g) have the relationship of y ≈ 0.13x. This indicates that the methylene blue adsorption increases with the BET specific surface area. Therefore, the methylene blue adsorption can be an index alternative to BET specific surface area.

In the present invention, it is preferred that the ratio y/x of the carbon material be 0.15 or more as described above. In contrast to this, the conventional globular graphite particles have a ratio y/x of 0.13. Therefore, when the ratio y/x is 0.15 or more, the methylene blue adsorption is larger than that of the conventional globular graphite having the same BET specific surface area. That is, in this case, although some condensation occurs in the dry state, the graphene interlayer distance or the graphite interlayer distance can be further extended in the wet state such as in methanol, as compared with in the dry state.

### (Dispersion medium)

Examples of the dispersion medium that is used include, but are not particularly limited to, an aqueous solvent, a nonaqueous solvent, a mixed solvent of an aqueous solvent and a nonaqueous solvent, or a mixed solvent of different nonaqueous solvents.

Examples of the aqueous solvent that can be used include, but are not particularly limited to, solvents such as water, and a mixture of water and carboxymethylcellulose (CMC).

Examples of the nonaqueous solvent that can be used include, but are not particularly limited to, alcoholic solvents typified by methanol, ethanol and propanol, tetrahydrofuran, N-methyl-2-pyrrolidone and the like solvents, for example, for the ease of dispersion.

Among these, N-methyl-2-pyrrolidone is preferred as the dispersion medium because the later-described slurry for electrode formation can be prepared more easily, and the later-described dispersibility imparting agent can be dissolved more easily.

It is preferred that the dispersion medium have a viscosity at 25°C of 0.89 mPa•s or more and 1.89 mPa•s or less. When the viscosity of the dispersion medium is less than the aforementioned lower limit, the carbon material is easy to settle, and the operation such as re-stirring, redispersion or the like can be complicated. When the viscosity of the dispersion medium is more than the aforementioned upper limit, it is sometimes impossible to sufficiently loosen the mass of the carbon material.

Examples of the dispersion medium having a viscosity at 25°C of 0.89 mPa•s or more and 1.89 mPa•s or less include water (0.89 mPa•s), and N-methyl-2-pyrrolidone (1.89 mPa•s). The viscosity refers to a value measured, for example, by a Brookfield viscosity meter.

Examples of the method for dispersing the carbon material in the dispersion medium include, but are not limited to, dispersion by ultrasonication, dispersion by a mixer, dispersion by a jet mill, or dispersion by a stirrer.

### (Dispersibility imparting agent)

The carbon material-containing dispersion liquid of the present invention may further include a dispersibility imparting agent. The dispersibility imparting agent is a substance capable of further suppressing generation of an agglomerate of the carbon material used in the present invention, and a binder as the binder contained in the later-described slurry for electrode formation.

The content of the dispersibility imparting agent in the carbon material-containing dispersion liquid is not particularly limited. It is preferred that a ratio B/(A + B) where A represents a weight of the carbon material used in the present invention and B represents a weight of the dispersibility imparting agent, falls within a range of 0.001 or more and 0.15 or less.

When the ratio B/(A + B) is too small, it can be difficult to obtain the effect of suppressing generation of an agglomerate of the carbon material, and a binder as the binder contained in the later-described slurry for electrode formation. On the other hand, when the ratio B/(A + B) is too large, the handleability can deteriorate and formation of an electrode can become difficult due to appearance of the thickening property.

From the viewpoint of further enhancing the effect of suppressing generation of an agglomerate, and further improving the handleability, it is more preferred that the ratio B/(A + B) be 0.0025 or more and 0.10 or less. From the viewpoint of further decreasing the rate of the decomposition reaction in the battery reaction, it is further preferred that the ratio B/(A + B) be 0.005 or more and 0.075 or less.

Examples of the dispersibility imparting agent include a polyvinyl acetal resin or a polyvinylidene fluoride resin as described above. These may be used singly or in combination of plural kinds.

It is preferred that the polyvinyl acetal resin have a weight average molecular weight of 10,000 or more and 50,000 or less. When the weight average molecular weight is less than 10,000, it can be difficult to obtain the effect of suppressing generation of an agglomerate of the carbon material used in the present invention and a binder as the binder contained in the later-described slurry for electrode formation. On the other hand, when the weight average molecular weight is more than 50,000, the handleability can deteriorate and formation of an electrode can become difficult due to appearance of the thickening property in the carbon material-containing dispersion liquid.

It is preferred that the polyvinylidene fluoride resin have a weight average molecular weight of 100,000 or more and 500,000 or less. When the weight average molecular weight is less than 100,000, it can be difficult to obtain the effect of suppressing generation of an agglomerate of the carbon material used in the present invention and a binder as the binder contained in the later-described slurry for electrode formation. On the other hand, when the weight average molecular weight is more than 500,000, the handleability can deteriorate and formation of an electrode can become difficult due to appearance of the thickening property in the carbon material-containing dispersion liquid. The weight average molecular weight refers to a weight average molecular weight, calculated on the polystyrene equivalent basis, measured by gel permeation chromatography (GPC).

The polyvinylidene fluoride resin may be a homopolymer of polyvinylidene fluoride, or may be a copolymer of a monomer constituting the polyvinylidene fluoride and other monomer.

A functional group may be introduced into the dispersibility imparting agent so as to further improve the dispersibility. Only one kind or a combination of two or more kinds of these dispersibility imparting agents may be used.

### [Slurry for electrode formation]

A slurry for electrode formation of the present invention includes a carbon material-containing dispersion liquid as described above, an active material, and a binder. The slurry for electrode formation is used in forming an electrode of a nonaqueous electrolyte secondary battery. The slurry for electrode formation of the present invention is excellent in dispersibility of the carbon material because the slurry contains the carbon material-containing dispersion liquid as described above. Therefore, it is possible to enhance the battery characteristics of the secondary battery.

The carbon material contained in the carbon material-containing dispersion liquid is used as a conductive auxiliary agent. When the dispersibility imparting agent is contained in the carbon material-containing dispersion liquid, it is possible to further suppress agglomeration of the carbon material which is a conductive auxiliary agent and a binder in forming an electrode.

The electrode active material is an active material managing charging and discharging reaction of the nonaqueous electrolyte secondary battery. The electrode active material is not particularly limited insofar as it can be involved in charging and discharging reaction of the nonaqueous electrolyte secondary battery. In the case of a positive electrode active material, examples include a laminar rock salt type material, a spinel-type material, and an olivine acid iron-based material. In the case of a negative electrode active material, examples include a graphite-based material, a silicon-based material, and a titanium-based material. Thus, the slurry for electrode formation may be a slurry for positive electrode, or may be a slurry for negative electrode.

Hereinafter, details of each material constituting the positive electrode slurry of the present invention will be described. Each material other than the active material may be applied to the negative electrode slurry.

### (Positive electrode active material)

The positive electrode active material used in the present invention may be any material insofar as it causes progression of desorption and insertion reactions of lithium ions. Examples of the positive electrode active material include a lithium transition metal complex oxide having a laminar rock salt-type structure, and a lithium transition metal complex oxide having a spinel structure. A mixture of a plurality of these positive electrode active materials is also be applicable.

Examples of the lithium transition metal complex oxide having a laminar rock salt-type structure include the compounds represented by the following formula (1).

LiₐNi_{b}Mn_{c}CO_{d}XₑO₂... Formula (1)

(In formula (1), X represents at least one selected from the group consisting of B, Mg, Al, Si, Ti, V, Cr, Fe, Cu, Zn, Ga, Ge, Sr, Zr, Nb, Mo, In and Sn, a, b, c, d and e satisfy 0 < a ≤ 1.2, 0 ≤ b ≤ 1, 0 ≤ c ≤ 1, 0 ≤ d < 1, 0 ≤ e ≤ 1, and b + c + d + e = 1.)

In LiₐNi_{b}Mn_{c}CO_{d}XₑO₂, a satisfies 0 < a ≤ 1.2. When a ≤ 0, the compound may not function as a positive electrode active material. On the other hand, when a > 1.2, there is sometimes the case that impurities such as lithium carbonate are abundantly contained.

In LiₐNi_{b}Mn_{c}Co_{d}XₑO₂, each of b, c, d, and e satisfies 0 ≤ b ≤ 1, 0 ≤ c ≤ 1, 0 ≤ d < 1, 0 ≤ e ≤ 1, b + c + d + e = 1. When b > 1, c > 1, e > 1, or d ≥ 1, the stability of the positive electrode active material can deteriorate.

As the lithium transition metal complex oxide having a laminar rock salt type structure, a lithium transition metal complex oxide having a laminar rock salt type structure, represented by LiₐNi_{b}Mn_{c}Co_{d}O₂ (provided that 0 < a ≤ 1.2, 0 < b < 1, 0 < c < 1, 0 < d < 1, and b + c + d = 1 are satisfied), LiₐNi_{b}Mn_{c}O₂ (provided that 0 < a ≤ 1.2, 0 < b < 1, 0 < c < 1, and b + c = 1 are satisfied), LiₐNi_{b}Co_{d}AlₑO₂ (provided that 0 < a ≤ 1.2, 0 < b < 1, 0 < d < 1, 0 < e < 1, and b + d + e = 1 are satisfied), LiₐNi_{b}XₑO₂ (provided that 0 < a ≤ 1.2, 0 < b < 1, 0 < e < 1, and b + e = 1 are satisfied), LiₐMn_{c}XₑO₂ (provided that 0 < a ≤ 1.2, 0 < c < 1, 0 < e < 1, and c + e = 1 are satisfied), or LiₐCo_{d}XₑO₂ (provided that 0 < a ≤ 1.2, 0 < d < 1, 0 < e < 1, and d + e = 1 are satisfied) is preferred from the viewpoint of further enhancing the stability in the positive electrode active material.

From the viewpoint of further enhancing the stability of the positive electrode active material itself, and further facilitating the production method, at least one selected from the group consisting of LiNi_{1/3}Mn_{1/3}Co_{1/3}O₂, LiNi_{0.5}Mn_{0.3}Co_{0.2}O₂, LiNi_{0.5}Mn_{0.5}O₂, LiNi_{0.4}Mn_{0.4}Co_{0.2}O₂, LiNi_{0.1}Mn₀.₁Co_{0.8}O₂, LiNi_{0.8}Co_{0.16}Al_{0.04}O₂, LiNi_{0.8}Co_{0.15}Al_{0.05}O₂, LiNi_{0.8}Co_{0.1}Al_{0.1}O₂, LiNiO₂, LiMnO₂, or LiCo_{d}XₑO₂ (provided that 0 < d < 1, 0 < e < 1, and d + e = 1 are satisfied) is more preferred.

The lithium transition metal complex oxide having such a laminar rock salt type structure may further be doped with an element that is the same or different from X. A so-called lithium rich material in which a is larger than 1 is also included in the present invention.

Examples of the lithium transition metal complex oxide having a spinel structure include the compounds represented by the following formula (2).

Li₁₊ₓM_{y}Mn_{2-x-y}O₄...Formula (2)

(In formula (2), x and y respectively fall within 0 ≤ x ≤ 0.2, 0 < y ≤ 0.6, M represents at least one selected from the group consisting of elements belonging to Group 2 to Group 13, and the third to fourth periods (provided that Mn is excluded).)

From the viewpoint of further enhancing the stability of the positive electrode active material itself, the element belonging to Group 2 to Group 13, and the third to fourth periods is preferably Al, Mg, Zn, Co, Fe, Ti, Cu, Ni, or Cr, more preferably Al, Mg, Zn, Ti, Ni or Cr. From the viewpoint of further enhancing the stability of the positive electrode active material itself, Al, Mg, Zn, Ni, or Ti is further preferred. The elements belonging to Group 2 to Group 13, and the third to fourth periods may be one or two or more kinds.

In Li₁₊ₓM_{y}Mn_{2-x-y}O₄, x satisfies 0 ≤ x ≤ 0.2. When x < 0, the capacity of positive electrode active material can be reduced. On the other hand, when x > 0.2, there is sometimes the case that impurities such as lithium carbonate are abundantly contained.

In Li₁₊ₓM_{y}Mn_{2-x-y}O₄, y satisfies 0 < y ≤ 0.6. When y = 0, the stability of the positive electrode active material can deteriorate. On the other hand, when y > 0.6, there is sometimes the case that impurities such as oxide of M are abundantly contained.

Among these lithium transition metal complex oxides having a spinel structure, at least one selected from Li₁,ₓAl_{y}Mn_{2-x-y}O₄ (0 ≤ x ≤ 0.1, 0 < y ≤ 0.1), Li₁₊ₓMg_{y}Mn_{2-x-y}O₄ (0 ≤ x ≤ 0.1, 0 < y ≤ 0.1), Li₁₊ₓZn_{y}Mn_{2-x-y}O₄ (0 ≤ x ≤ 0.1, 0 < y ≤ 0.1), Li ₁₊ₓCr_{y}Mn_{2-x-y}O₄ (0 ≤ x ≤ 0.1, 0 < y ≤ 0.1), and Li₁₊ₓNi_{y}Mn_{2-x-y}O₄ (0 ≤ x ≤ 0.1, 0 < y ≤ 0.6) is preferred because generation of the gas can be further suppressed, and the effect of enhancing the voltage of the end-of-charge voltage is further large by the combination with a nonaqueous electrolyte as will be described later. Li₁₊ₓAl_{y}Mn_{2-x-y}O₄ (0 ≤ x ≤ 0.1, 0 < y ≤ 0.1), Li₁₊ₓMg_{y}Mn_{2-x-y}O₄ (0 ≤ x ≤ 0.1, 0 < y ≤ 0.1), or Li₁₊ₓNi_{y}Mn_{2-x-y}O₄ (0 ≤ x ≤ 0.1, 0 < y ≤ 0.6) is further preferred because a further effect is obtained.

It is preferred that a particle diameter of each of the lithium transition metal complex oxide having a laminar rock salt type structure, and the lithium transition metal complex oxide having a spinel structure be 0.1 µm or more and 50 µm or less. From the viewpoint of further improving the handleability, it is more preferred that the particle diameter be 0.5 µm or more and 30 µm or less. The particle diameter mentioned here is a value obtained by measuring the size of each particle from SEM, TEM images, and calculating a mean particle diameter. The particle may be a primary particle or may be a granule formed of agglomerated primary particles.

It is preferred that a specific surface area of each of the lithium transition metal complex oxide having a laminar rock salt type structure, and the lithium transition metal complex oxide having a spinel structure be 0.1 m²/g or more and 50 m²/g or less. In this case, it is possible to obtain a desired output density more reliably. The specific surface area can be calculated by measurement by the BET method.

Either one of the lithium transition metal complex oxide having a laminar rock salt type structure, and the lithium transition metal complex oxide having a spinel structure may be used, or a mixture of both oxides may be used. For example, a mixture of two or more kinds of lithium transition metal complex oxides having a laminar rock salt type structure (or lithium transition metal complex oxides having a spinel structure) having different compositions and particle sizes may be used.

### (Binder)

Although not particularly limited, for example, as the binder, at least one selected from the group consisting of polyvinylidene fluoride (PVdF), polytetrafluoroethylene (PTFE), styrene-butadiene rubber, polyimide, and derivatives thereof can be used.

It is preferred that the binder be dissolved or dispersed in a nonaqueous solvent or water from the viewpoint of easier production of the positive electrode of the secondary battery. Examples of the nonaqueous solvent include, but are not limited to, N-methyl-2-pyrrolidone (NMP), dimethylformamide, dimethylacetamide, methyl ethyl ketone, methyl acetate, ethyl acetate, or tetrahydrofuran. A dispersing agent, a thickener or the like may be added to these binders.

The amount of the binder contained in the slurry for positive electrode of the present invention is preferably 0.3 parts by weight or more and 30 parts by weight or less, more preferably 0.5 parts by weight or more and 15 parts by weight or less, relative to 100 parts by weight of the positive electrode active material. When the amount of the binder falls within the above range, it is possible to further enhance the adhesivity with the collector while keeping the adhesivity between the positive electrode active material and the carbon material.

### (Second carbon material)

When the aforementioned carbon material in which graphite is partially exfoliated is set as a first carbon material, the slurry for positive electrode of the present invention may include a second carbon material other than the first carbon material. The second carbon material is a carbon material that is different from the first carbon material, and does not have a structure in which graphite is partially exfoliated. Examples of the second carbon material include, but are not particularly limited to, graphene, a particulate graphite compound, a fibrous graphite compound, or carbon black. These may be used singly or in combination of plural kinds.

The graphene may be graphene oxide or reduced graphene oxide.

Examples of the particulate graphite compound include, but are not particularly limited to, natural graphite, artificial graphite and expanded graphite.

Examples of the fibrous graphite compound include, but are not particularly limited to, carbon nanohorn, carbon nanotube, or carbon fiber.

Examples of the carbon black include, but are not particularly limited to, furnace black, ketjen black, or acetylene black.

From the viewpoint of further enhancing the electrolyte retainability of the secondary battery, the BET specific surface area of the second carbon material is preferably 5 m²/g or more. From the viewpoint of further enhancing the electrolyte retainability of the secondary battery, the BET specific surface area of the second carbon material is more preferably 10 m²/g or more, and further preferably 25 m²/g or more. Also, from the viewpoint of further improving the handleability in preparation of the positive electrode, the BET specific surface area of the second carbon material is preferably 2500 m²/g or less.

The first carbon material having a structure in which graphite is partially exfoliated, and the second carbon material not having a structure in which graphite is partially exfoliated can be distinguished from each other, for example, by SEM, TEM or the like.

Including the first carbon material and the second carbon material means that, for example, both the first carbon material and the second carbon material exist in the later-described positive electrode. The method for making the first carbon material and the second carbon material exist is not particularly limited, and the first carbon material and the second carbon material may be mixed at the time of preparing a later-described positive electrode, or may be preliminarily mixed together.

On the surface of the second carbon material, a functional group may exist. In this case, it becomes easier to prepare a later-described positive electrode.

In the present invention, it is preferred that a ratio A/B of a weight A of the first carbon material, and a weight B of the second carbon material fall within a range of 0.01 or more and 100 or less. When the ratio A/B falls within the aforementioned range, it is possible to further decrease the resistance of the positive electrode in the secondary battery. Therefore, it is possible to further suppress the heat generation at the time of charging and discharging at a large current in application in a secondary battery.

### (Method for producing slurry for electrode formation)

The slurry for electrode formation of the present invention can be obtained by mixing the aforementioned carbon material-containing dispersion liquid, an active material, and a solution or dispersion of a binder. Hereinafter, a method for producing a slurry for positive electrode is described. This may be applied to a slurry for negative electrode.

As a method for preparing a slurry for positive electrode, for example, a method of adding a positive electrode active material, and a solution or dispersion of a binder, to the aforementioned carbon material-containing dispersion liquid, and mixing them with a mixer or the like. Examples of the mixer used in mixing include, but are not particularly limited to, a planetary mixer, a Disper, a Thin-Film Spin System Mixer, a jet mixer, or a planetary centrifugal mixer. The solution of a binder means a solution in which a binder is dissolved or dispersed in a nonaqueous solvent or water. Examples of the nonaqueous solvent include, but are not limited to, N-methyl-2-pyrrolidone (NMP), dimethylformamide, dimethylacetamide, methyl ethyl ketone, methyl acetate, ethyl acetate, or tetrahydrofuran. A dispersing agent, a thickener or the like may be added to the solution of a binder. In the solution of a binder, it is preferred to use a solvent of the same kind as that in the carbon material-containing dispersion liquid of the present invention. Other solvent may be used insofar as such a solvent has compatibility with the solvent.

The solid concentration of the slurry for positive electrode is preferably 30% by weight or more and 95% by weight or less from the viewpoint of conducting the later-described coating more easily. From the viewpoint of further enhancing the storage stability, the solid concentration of the slurry for positive electrode is more preferably 35% by weight or more and 90% by weight or less. From the viewpoint of further lowering the production cost, the solid concentration of the slurry for positive electrode is further preferably 40% by weight or more and 85% by weight or less.

The solid concentration of the slurry for positive electrode can be controlled with a diluting solvent. It is preferred that a solvent of the same kind as that in the solution or dispersion of a binder be used as the diluting solvent. Other solvent may be used as the diluting solvent insofar as such a solvent has compatibility with the solvent.

### [Method for producing electrode for nonaqueous electrolyte secondary batteries]

The electrode for nonaqueous electrolyte secondary batteries of the present invention can be produced, for example, by applying the slurry for electrode formation prepared in the method as described above, on a collector foil substrate which is a collector, and removing the solvent and drying.

It is preferred that the collector foil substrate be aluminum or an alloy containing aluminum. Although not particularly limited, aluminum is preferably high purity aluminum typified by JIS standards 1030, 1050, 1085, 1N90, 1N99 and the like for its stability in an electrode reaction atmosphere.

Although not particularly limited, the thickness of the collector foil substrate is preferably 10 µm or more and 100 µm or less. When the thickness of the collector foil substrate is less than 10 µm, handling can be difficult from the viewpoint of preparation. On the other hand, when the thickness of the collector foil substrate is more than 100 µm, a disadvantage may arise from the economical point of view.

The collector foil substrate may be metal other than aluminum (copper, SUS, nickel, titanium, or an alloy thereof) of which surface is coated with aluminum.

Although not particularly limited, as a method for applying a slurry for electrode formation on a collector foil substrate, a method of applying the slurry with a doctor blade, a dye coater, a comma coater or the like, and then removing the solvent can be recited. Alternatively, a method of applying by spraying and then removing the solvent, or a method of applying by screen printing and then removing the solvent is also applicable.

As a method for removing the solvent, drying using an air blast oven or a vacuum oven is preferred because the method is rather simple and convenient. Examples of the atmosphere in which the solvent is removed include an air atmosphere, an inert gas atmosphere or a vacuum condition. Although not particularly limited, the temperature at which the solvent is removed is preferably 60°C or higher and 250°C or lower. When the temperature at which the solvent is removed is lower than 60°C, a significant time can be required for removing the solvent. On the other hand, when the temperature at which the solvent is removed is higher than 250°C, a binder can deteriorate.

The electrode for nonaqueous electrolyte secondary batteries of the present invention may be compressed to have a desired thickness and density. Although not particularly limited, compression can be conducted, for example, by using a roll press, a hydraulic press or the like.

Although not particularly limited, the thickness of the electrode for nonaqueous electrolyte secondary batteries of the present invention after compression is preferably 10 µm or more and 1000 µm or less. When the thickness is less than 10 µm, it is sometimes difficult to obtain a desired capacity. On the other hand, when the thickness is larger than 1000 µm, it is sometimes difficult to obtain a desired output density.

Although not particularly limited, the density of the electrode for nonaqueous electrolyte secondary batteries of the present invention is preferably 1.0 g/cm³ or more and 4.0 g/cm³ or less. When the density is less than 1.0 g/cm³, contact between the active material and the carbon material is insufficient, so that the electron conductivity can deteriorate. On the other hand, when the density is more than 4.0 g/cm³, the later-described electrolyte is difficult to penetrate in the electrode, so that the lithium conductivity can deteriorate.

It is preferred that the electrode for nonaqueous electrolyte secondary batteries of the present invention have an electric capacity per 1 cm² of the electrode of 0.5 mAh or more and 10.0 mAh or less. When the electric capacity is less than 0.5 mAh, the size of the battery having a desired capacity can become larger. When the electric capacity is larger than 10.0 mAh, it sometimes becomes difficult to obtain a desired output density. The electric capacity per 1 cm² of the electrode may be calculated by preparing a half cell having lithium metal as a counter electrode after formation of the electrode, and measuring the charging and discharging characteristics.

Although not particularly limited, the electric capacity per 1 cm² of the electrode of the electrode for nonaqueous electrolyte secondary batteries can be controlled by the weight of the electrode to be formed per unit area of the collector foil substrate. For example, the electric capacity can be controlled by the application thickness at the time of application of the slurry for electrode formation as described above.

In the method for producing an electrode for nonaqueous electrolyte secondary batteries of the present invention, when the carbon material-containing dispersion liquid contains the aforementioned dispersibility imparting agent, it is possible to further suppress generation of an agglomerate of the carbon material and the binder on the electrode surface, and it is possible to form a more uniform electrode.

### [Nonaqueous electrolyte secondary battery]

The nonaqueous electrolyte secondary battery of the present invention may be any compound insofar as it causes progression of desorption and insertion reactions of alkali metal ions or alkali earth metal ions. Examples of the alkali metal ions include lithium ions, sodium ions or potassium ions. Examples of the alkali earth metal include calcium ions or magnesium ions. In particular, the present invention is greatly effective for a positive electrode of a nonaqueous electrolyte secondary battery, and among others, the present invention can be suitably used in a lithium ion secondary battery using lithium ions.

The positive electrode and the negative electrode of the nonaqueous electrolyte secondary battery of the present invention may be in such a form that the same electrode is formed on both surfaces of the collector foil substrate (collector), or may be in such a form that a positive electrode is formed on one surface of the collector, and a negative electrode is formed on the other surface of the collector, namely a bipolar electrode.

The nonaqueous electrolyte secondary battery of the present invention may be formed by winding a positive electrode and a negative electrode interposed by a separator, or may be formed by laminating these electrodes and the separator (laminate). The positive electrode, the negative electrode, and the separator contain a nonaqueous electrolyte performing lithium ion conduction. Therefore, as the nonaqueous electrolyte secondary battery, for example, a lithium ion secondary battery can be recited.

As for the nonaqueous electrolyte secondary battery of the present invention, the laminate may be wound or a plurality of the laminates are stacked and then packed with a laminate film, or may be packed with a metal can of a square shape, an elliptic shape, a cylindrical shape, a coin shape, a button shape or a sheet shape. The package may be provided with a mechanism for releasing the generated gas. As for the number of layers in the laminate, lamination can be carried out until a desired voltage and battery capacity appear.

The nonaqueous electrolyte secondary battery of the present invention can be appropriately connected in series or in parallel to give a battery pack depending on the desired size, capacity and voltage. In the battery pack, it is preferred that a control circuit be attached to the battery pack so as to check the charging condition of each battery and improve the safety.

### (Positive electrode)

As the positive electrode, the electrode for nonaqueous electrolyte secondary batteries as described above can be used. The positive electrode for nonaqueous electrolyte secondary batteries can be obtained by applying a slurry for positive electrode containing the carbon material-containing dispersion liquid of the present invention on a collector foil substrate, and drying the slurry. Therefore, the nonaqueous electrolyte secondary battery having such a positive electrode is excellent in battery characteristics such as output characteristics.

### (Negative electrode)

Although not particularly limited, as the negative electrode, those containing a negative electrode active material such as natural graphite, artificial graphite, metal oxide, lithium titanate, or silicon-based material can be used. As the negative electrode, the electrode for nonaqueous electrolyte secondary batteries as described above may be used.

### (Separator)

The separator may have such a structure that it can be disposed between the positive electrode and the negative electrode, and is insulative, and can include the later-described nonaqueous electrolyte. Examples of the material for the separator include a woven fabric, a nonwoven fabric, a microporous film of nylon, cellulose, polysulfone, polyethylene, polypropylene, polybutene, polyacrylonitrile, polyimide, polyamide, polyethylene terephthalate, and a composition of two or more of these.

The separator may contain various plasticizers, antioxidants, and flame retarders, or may be coated with a metal oxide or the like.

Although not particularly limited, the thickness of the separator is preferably 5 µm or more and 100 µm or less. When the thickness of the separator is less than 5 µm, the positive electrode and the negative electrode can be in contact with each other. When the thickness of the separator is larger than 100 µm, the resistance of the battery can be high. From the viewpoint of further improving the economic efficiency and the handleability, it is more preferred that the thickness of the separator be 10 µm or more and 50 µm or less.

### (Nonaqueous electrolyte)

While the nonaqueous electrolyte used in the nonaqueous electrolyte secondary battery of the present invention is not particularly limited, gel electrolytes prepared by impregnating a polymer with an electrolyte in which a solute is dissolved in a nonaqueous solvent, polymer solid electrolytes such as polyethylene oxide or polypropylene oxide, or inorganic solid electrolytes such as sulfide glass or oxynitride can be used.

As the nonaqueous solvent, a cyclic compound-type aprotic solvent and/or a chain compound-type aprotic solvent is preferably contained because the later-described solute can be dissolved more easily. Examples of the cyclic compound-type aprotic solvent include cyclic carbonate, cyclic ester, cyclic sulfone or cyclic ether. Examples of the chain compound-type aprotic solvent include chain carbonate, chain carboxylic ester or chain ether. In addition to the above, a solvent generally used as a solvent of nonaqueous electrolyte such as acetonitrile may be used. More specifically, dimethyl carbonate, methylethyl carbonate, dimethyl carbonate, dipropyl carbonate, methylpropyl carbonate, ethylene carbonate, propylene carbonate, butylene carbonate, γ-butyl lactone, 1,2-dimethoxyethane, sulfolane, dioxolane, methyl propionate or the like can be used. These solvents may be used alone or in mixture of two or more kinds. From the viewpoint of dissolving the later-described solute more easily, and further heightening the conductivity of lithium ions, it is preferred to use a mixed solvent of two or more kinds.

Although not particularly limited, the solute is preferably LiClO₄, LiBF₄, LiPF₆, LiAsF₆, LiCF₃SO₃, LiBOB (Lithium Bis (Oxalato) Borate), or LiN(SO₂CF₃)₂. In this case, dissolution can be further facilitated by the solvent.

It is preferred that the concentration of the solute contained in the electrolyte be 0.5 mol/L or more and 2.0 mol/L or less. When the concentration of the solute is less than 0.5 mol/L, desired lithium ion conductivity sometimes does not appear. On the other hand, when the concentration of the solute is higher than 2.0 mol/L, the solute sometimes does not further dissolve. The nonaqueous electrolyte may contain a small amount of an additive such as a flame retarder or a stabilizer.

### Examples

Hereinafter, the present invention is described more specifically by way of examples; however, the present invention is no way limited by these examples, and can be appropriately modified without departing from the scope of the invention.

### (Production example 1: production example of carbon material)

First, 10 g of expanded graphite (available from Toyo Tanso Co., Ltd., product name "PF powder 8F", BET specific surface area = 22 m²/g), 20 g of thermally decomposable foaming agent (ADCA, available from EIWA CHEMICAL IND. CO., LTD., product name "VINYFOR AC#R-K3", thermal decomposition temperature 210°C), 200 g of polypropylene glycol (available from Sanyo Chemical Industries, Ltd., SANNIX GP-3000, average molecular weight = 3000), and 200 g of tetrahydrofuran were mixed to prepare a raw material composition. By irradiating the raw material composition with an ultrasonic wave at 100 W, oscillating frequency: 28 kHz for 5 hours with an ultrasonic processor (available from HONDA ELECTRONICS Co., LTD.), polypropylene glycol (PPG) was adsorbed to the expanded graphite. In this manner, a composition in which polypropylene glycol is adsorbed to the expanded graphite was prepared.

Next, after shape-forming a composition in which polypropylene glycol is adsorbed to the expanded graphite by solution casting, the composition was heated at 80°C for 2 hours, at 110°C for 1 hour, at 150°C for 1 hour in sequence to remove tetrahydrofuran (hereinafter, referred to as THF). Thereafter, the composition from which THF was removed was subjected to a heat treatment at 110°C for 1 hour, and further to a heat treatment at 230°C for 2 hours to foam the composition.

Further, by subjecting the foamed composition to a heat treatment at 450°C for 0.5 hours, a carbon material in which a part of polypropylene glycol (resin) remains was prepared.

Lastly, by subjecting the carbon material to a heat treatment at 350°C for 2.5 hours, a carbon material containing 15% by weight of resin, relative to the total weight, and having a structure in which graphite is partially exfoliated (partially exfoliated graphite) was prepared. As for the resin amount, the reduction by weight in the range of 350°C to 600°C was calculated as a resin amount by means of TG (available from Hitachi High-Tech Science Corporation, Product number "STA7300").

The mean particle diameter of the obtained carbon material was measured using a laser diffraction/scattering particle diameter distribution measuring device (available from HORIBA, Ltd., model "LA-950"). As a result of the measurement, the mean particle diameter of the carbon material was 6 µm.

A measured D/G ratio which is a peak intensity ratio of a D band to a G band in a Raman spectrum of the obtained carbon material was 0.6. The Raman spectrum of the carbon material was measured by using a Raman spectrometer (available from Thermo Scientific, product name "Nicolet Almega XR").

The D/G ratio was determined by regarding the maximum peak intensity within the range of 1300 cm⁻¹ to 1400 cm⁻¹ as a peak intensity of the D band, and the maximum peak intensity between 1500 cm⁻¹ and 1600 cm⁻¹ as a peak intensity of the G band in the obtained Raman spectrum.

The obtained carbon material was measured for a BET specific surface area by using a specific surface area measuring device (available from Shimadzu Corporation, product number "ASAP-2000", nitrogen gas), and the result was 120 m²/g.

A methylene blue adsorption of the obtained carbon material measured in the following procedure was 61.0 µmol/g. A ratio y/x of the BET specific surface area x and the methylene blue adsorption y was 0.508.

A methylene blue adsorption was measured in the following manner. First, in a measuring flask, a methylene blue (available from KANTO CHEMICAL CO., INC., guaranteed reagent) solution having a concentration of 10.0 mg/L, 5.0 mg/L, 2.5 mg/L, or 1.25 mg/L in methanol was prepared, and absorbance of each solution was measured by an ultraviolet and visible spectrophotometer (available from Shimadzu Corporation, product number "UV-1600"), and a calibration curve was prepared. Next, 10 mg/L methylene blue was prepared, and in a 100 mL recovery flask, a carbon material to be measured (0.005 g to 0.05 g, varied depending on the BET value of the sample), the methylene blue solution (10 mg/L, 50 mL), and a stirrer bar were added, and treated for 15 minutes with an ultrasonic cleaner (available from AS ONE Corporation), and then stirred in a cooling bath (25°C) for 60 minutes. Further, after reaching to the adsorption equilibrium, the carbonaceous material and the supernatant were separated from each other by centrifugal separation, and the 10 mg/L of methylene blue solution which is a blank, and the supernatant were measured for absorbance by an ultraviolet and visible spectrophotometer, and a difference in absorbance between the blank and the supernatant was calculated.

Lastly, on the basis of the difference in absorbance and the calibration curve, a reduction in concentration of the methylene blue solution was calculated, and an absorption of methylene blue on the surface of the carbon material to be measured was calculated according to the following formula (3) .

Adsorption of methylene blue (mol/g) = {reduction in concentration of methylene blue solution (g/L) × volume of measurement solvent (L)}/{molecular weight of methylene blue (g/mol) × mass of carbon material used in measurement (g)}...Formula (3)

A particle concentration of the carbon material when a 20 ppm solution of the obtained carbon material in N-methyl-2-pyrrolidone was measured by a flow-type particle image analyzer was 19,500 particles/µL.

The particle concentration of the carbon material was determined by imaging a static image of particles flowing in the flow cell for 20 ppm solution of the carbon material in N-methyl-2-pyrrolidone, and measuring the particle concentration by using a flow-type particle image analyzer (FPIA-3000, available from Sysmex Corporation).

### (Production example 2: production example of positive electrode active material)

LiCo_{1/3}Ni_{1/3}Mn_{1/3}O₂ as a positive electrode active material produced in the present production example was prepared in the method described in the document (Journal of Power Sources, Vol. 146, pp. 636-639 (2005)).

That is, first, lithium hydroxide, and a cobalt-nickel-manganese (1 : 1 : 1 molar ratio) ternary hydroxide were mixed, to obtain a mixture. Next, the mixture was heated to 1000°C in an air atmosphere to produce a positive electrode active material.

### (Example 1)

First, to the carbon material prepared in Production example 1, N-methyl-2-pyrrolidone was added as a dispersion medium, and a dispersion was prepared so that the concentration of the carbon material was 0.01% by weight in the dispersion medium. The prepared dispersion was treated for 5 hours with an ultrasonic cleaner (available from AS ONE Corporation) to prepare a carbon material-containing dispersion liquid.

Light transmittance at a wavelength of 650 nm of the obtained carbon material-containing dispersion liquid was determined by loading the carbon material-containing dispersion liquid in a cell having an optical path length of 10 mm, and measuring by a visible and ultraviolet spectrophotometer (available from JASCO Corporation, product number "V-570"). Light transmittance was measured after leaving the sample to stand at 25°C for 1 minute and for 24 hours after preparation. From a light transmittance after leaving to stand for 1 minute after preparation a%, and a light transmittance after leaving to stand for 24 hours after preparation b%, a variation in light transmittance (b-a) was determined. In Example 1, light transmittance after a lapse of 1 minute was 1.7%, and light transmittance after a lapse of 24 hour was 16%. The variation (b-a) in light transmittance at this time was 14.3%.

### Production of positive electrode;

A positive electrode of Example 1 was prepared in the following manner.

First, to 92 parts by weight of the positive electrode active material obtained in Production example 2, a carbon material-containing dispersion liquid prepared in the manner as described above was added in an amount of 4 parts by weight, and further, a binder (PVdF, solid concentration 12% by weight, solution in NMP) was mixed so that the solid content was 4 parts by weight, to prepare a slurry for positive electrode. Next, the slurry for positive electrode was applied on an aluminum foil (20 µm), and the solvent was removed by an air blast oven at 120°C for 1 hour. Subsequently, vacuum drying at 120°C for 12 hours was conducted. In the same manner, the slurry for positive electrode was applied on the back face of the aluminum foil, and dried.

Lastly, pressing with a roll pressor was conducted to prepare a positive electrode (both-side coated) having an electrode density of 2.8 g·cc⁻¹. The electrode density was calculated from the weight and the thickness of the electrode per unit area. The capacity of the positive electrode was calculated from the electrode weight per unit area, and the theoretical capacity (150 mAh/g) of the positive electrode active material. The capacity of the positive electrode (both sides) was 5.0 mAh/cm².

### Production of negative electrode;

A negative electrode of Example 1 was prepared in the following manner.

First, a binder (PVdF, solid concentration 12% by weight, NMP solution) was mixed into 100 parts by weight of artificial graphite serving as a negative electrode active material, so that the solid content was 5 parts by weight, to prepare a slurry. Next, the obtained slurry was applied on a copper foil (20 µm), and the solvent was removed by an air blast oven at 120°C for 1 hour. Subsequently, vacuum drying at 120°C for 12 hours was conducted. In the same manner, the slurry was applied also on the back face of the copper foil, and dried.

Lastly, pressing with a roll pressor was conducted to prepare a negative electrode having an electrode density of 1.7 g·cc⁻¹. The electrode density was calculated from the weight and the thickness of the electrode per unit area. The capacity of the negative electrode was calculated from the electrode weight per unit area, and the theoretical capacity (350 mAh/g) of the negative electrode active material. The capacity of the negative electrode (both-sides) was 6.0 mAh/cm².

### Production of nonaqueous electrolyte secondary battery;

First, the prepared positive electrode (electrode part: 40 mm × 50 mm), negative electrode (electrode part: 45 mm × 55 mm), and a separator (polyolefinic microporous film, 25 µm, 50 mm × 60 mm) were laminated in the sequence of negative electrode/separator/positive electrode/separator/negative electrode so that the capacity of the positive electrode was 500 mAh (5 sheets of positive electrodes, 6 sheets of negative electrodes). Next, to the positive electrode and the negative electrode on both ends, an aluminum tab and a nickel plated copper tab were respectively vibration welded. Thereafter, the resultant laminate was introduced into a pouched aluminum laminate sheet, and the pouched aluminum laminate sheet was heat-welded on three sides, to prepare a nonaqueous electrolyte secondary battery before encapsulation of electrolyte. Further, after vacuum drying the nonaqueous electrolyte secondary battery before encapsulation of electrolyte at 60°C for 3 hours, 20 g of a nonaqueous electrolyte (ethylene carbonate/dimethyl carbonate: 1/2 volume %, LiPF₆: 1 mol/L) was introduced. Thereafter, sealing under reduced pressure was conducted to prepare a nonaqueous electrolyte secondary battery. These steps were carried out in an atmosphere (dry box) of a dew point of - 40°C or lower. Lastly, the prepared nonaqueous electrolyte secondary battery was charged and discharged between 2.5V and 4.25 V, and taking the value of the discharge capacity at 0.2C as 100%, an output characteristic was calculated from the value of the discharge capacity at 2C.

### (Example 2)

A nonaqueous electrolyte secondary battery was prepared in the same manner as in Example 1 except that the concentration of the carbon material in the carbon material-containing dispersion liquid was 20% by weight, and an output characteristic was obtained.

### (Example 3)

A nonaqueous electrolyte secondary battery was prepared in the same manner as in Example 1 except that expanded graphite (available from FUJI KOKUEN KOGYOSYA, product name "FT-2") was used as a raw material, and the mean particle diameter of the carbon material was 1 µm, and an output characteristic was obtained.

### (Example 4)

A nonaqueous electrolyte secondary battery was prepared in the same manner as in Example 2 except that in preparation of the carbon material-containing dispersion liquid, a first carbon material which is the carbon material prepared in Production example 1 was mixed with acetylene black (available from Denka Company Limited., product name "DENKA BLACK, HS-100") as a second carbon material not having a structure in which graphite is partially exfoliated, in a ratio of 75% by weight : 25% by weight, and an output characteristic was obtained.

### (Example 5)

A nonaqueous electrolyte secondary battery was prepared in the same manner as in Example 1 except that the dispersion medium of the carbon material-containing dispersion liquid was water, and the binder used in preparation of a slurry for positive electrode was a dispersion of 60% by weight of polytetrafluoroethylene (PTFE) in water (available from Sigma-Aldrich), and an output characteristic was obtained.

### (Example 6)

A nonaqueous electrolyte secondary battery was prepared in the same manner as in Example 2 except that the dispersion medium of the carbon material-containing dispersion liquid was water, and the binder used in preparation of a slurry for positive electrode was a dispersion of 60% by weight of polytetrafluoroethylene (PTFE) in water (available from Sigma-Aldrich), and an output characteristic was obtained.

### (Comparative Example 1)

A nonaqueous electrolyte secondary battery was prepared in the same manner as in Example 1 except that scaly graphite (available from SEC CARBON, LIMITED., product name "FINE POWDER SNO5") was used in place of the carbon material prepared in Production example 1, and an output characteristic was obtained. The scaly graphite had a mean particle diameter of 5 µm.

### (Comparative Example 2)

A nonaqueous electrolyte secondary battery was prepared in the same manner as in Example 2 except that scaly graphite (available from SEC CARBON, LIMITED., product name "FINE POWDER SNO5") was used in place of the carbon material prepared in Production example 1, and an output characteristic was obtained. The scaly graphite had a mean particle diameter of 5 µm.

### (Comparative Example 3)

A nonaqueous electrolyte secondary battery was prepared in the same manner as in Example 1 except that scaly graphite (available from XG Sciences, product name "xGnP C-1000") was used in place of the carbon material prepared in Production example 1, and an output characteristic was obtained. The scaly graphite had a mean particle diameter of 0.5 µm.

### (Comparative Example 4)

A nonaqueous electrolyte secondary battery was prepared in the same manner as in Example 1 except that scaly graphite (available from SEC CARBON, LIMITED., product name "FINE POWDER SNO5") was used in place of the carbon material prepared in Production example 1, the dispersion medium of the carbon material-containing dispersion liquid was water, and the binder used in preparation of a slurry for positive electrode was a dispersion of 60% by weight of polytetrafluoroethylene (PTFE) in water (available from Sigma-Aldrich), and an output characteristic was obtained.

### (Comparative Example 5)

A nonaqueous electrolyte secondary battery was prepared in the same manner as in Example 2 except that scaly graphite (available from SEC CARBON, LIMITED., product name "FINE POWDER SNO5") was used in place of the carbon material prepared in Production example 1, the dispersion medium of the carbon material-containing dispersion liquid was water, and the binder used in preparation of a slurry for positive electrode was a dispersion of 60% by weight of polytetrafluoroethylene (PTFE) in water (available from Sigma-Aldrich), and an output characteristic was calculated.

### (Comparative Example 6)

A nonaqueous electrolyte secondary battery was prepared in the same manner as in Example 1 except that grafted graphite having a particle diameter of 20 µm was used in place of the carbon material prepared in Production example 1, and an output characteristic was obtained. Grafted graphite was prepared by dispersing graphite in a furfuryl alcohol solution, and microwave heating the dispersion.

Results of output characteristics of Examples 1 to 6 and Comparative Examples 1 to 6 are shown in the following Table 1. In Table 1, the particle concentration of the carbon material, and results of light transmittance (a), light transmittance (b) and variation (b-a) of the carbon material-containing dispersion liquid in Examples 1 to 6 and Comparative Examples 1 to 6 are shown together. The particle concentration of the carbon material of Example 4 was measured for the carbon material prepared by mixing the first carbon material and the second carbon material in a ratio of 75% by weight : 25% by weight.

**[Table 1]**

| | Dispersion medium | Carbon material | Mean particle diameter (µm) | Particle concentration (particles/ µL) | Concentration of carbon material (% by weight) | Light transmittance (a) of dispersion liquid after 1 minute (%) | Light transmittance (b) of dispersion liquid after 24 hours (%) | Variation (b-a) in light transmittance (%) | output characteristic (%) |
|---|---|---|---|---|---|---|---|---|---|
| Example 1 | N-methyl-2-pyrrolidone | Partially exfoliated graphite | 6 | 19,500 | 0.01 | 1.7 | 16 | 14.3 | 75 |
| Example 2 | N-methyl-2-pyrrolidone | Partially exfoliated graphite | 6 | 19,500 | 20 | 2.9 | 13 | 10.1 | 70 |
| Example 3 | N-methyl-2-pyrrolidone | Partially exfoliated graphite | 1 | 134,200 | 0.01 | 1.3 | 18 | 16.7 | 72 |
| Example 4 | N-methyl-2-pyrrolidone | Partially exfoliated graphite/ Acetylene black | 6 | 67,400 | 20 | 1 | 25 | 24.0 | 73 |
| Example 5 | Water | Partially exfoliated graphite | 6 | 19,500 | 0.01 | 2 | 59 | 57.0 | 71 |
| Example 6 | Water | Partially exfoliated graphite | 6 | 19,500 | 20 | 1.5 | 59 | 57.5 | 70 |
| Comparative Example 1 | N-methyl-2-pyrrolidone | Scaly graphite | 5 | 1,600 | 0.01 | 1.5 | 79 | 77.5 | 53 |
| Comparative Example 2 | N-methyl-2-pyrrolidone | Scaly graphite | 5 | 1,600 | 20 | 1.2 | 62 | 60.8 | 42 |
| Comparative Example 3 | N-methyl-2-pyrrolidone | Scaly graphite | 0.5 | 8,400 | 0.01 | 1.4 | 71 | 69.6 | 51 |
| Comparative Example 4 | Water | Scaly graphite | 5 | 1,600 | 0.01 | 1.9 | 97 | 95.1 | 52 |
| Comparative Example 5 | Water | Scaly graphite | 5 | 1,600 | 20 | 1 | 83 | 82.0 | 47 |
| Comparative Example 6 | N-methyl-2-pyrrolidone | Grafted graphite | 20 | 900 | 0.01 | 4 | 77 | 73.0 | 30 |

### (Example 7)

First, 0.01 g of a polyvinyl acetal resin (butyral resin, available from SEKISUI CHEMICAL CO., LTD., product name "BL1") as a dispersibility imparting agent was dissolved in 18.81 g of N-methyl-2-pyrrolidone (NMP) as a dispersion medium. Next, to the obtained solution, 0.99 g of the carbon material obtained in Production example 1 of the carbon material was added, and the resultant solution was treated with an ultrasonic cleaner (AS ONE Corporation) for 2 hours. Thus, a carbon material-containing dispersion liquid containing a carbon material, a dispersibility imparting agent, and a dispersion medium was prepared. A ratio B/(A + B) where A represents a weight of the carbon material and B represents a weight of the dispersibility imparting agent, was 0.01. A nonaqueous electrolyte secondary battery was prepared in the same manner as in Example 1 except that the carbon material-containing dispersion liquid prepared in this manner was used, and an output characteristic was obtained.

### (Example 8)

A nonaqueous electrolyte secondary battery was prepared in the same manner as in Example 7 except that as the dispersibility imparting agent, a polyvinylidene fluoride resin (PVdF, available from KUREHA CORPORATION, product name "#9100") was used in place of the polyvinyl acetal resin, and an output characteristic was obtained.

Results of output characteristics of Examples 7 and 8 are shown in the following Table 2. In Table 2, the particle concentration of the carbon material, and results of light transmittance (a), light transmittance (b) and variation (b-a) of the carbon material-containing dispersion liquid in Examples 7 and 8 are shown together.

**[Table 2]**

| | Dispersion medium | Carbon material | Mean particle diameter (µm) | Particle concentration (particles/ µL) | Concentration of carbon material (% by weight) | Ratio: B/ (A + B) | Light transmittance (a) of dispersion liquid after 1 minute (%) | Light transmittance (b) of dispersion liquid after 24 hours (%) | Variation (b-a) in light transmittance (%) | Output characteristic (%) |
|---|---|---|---|---|---|---|---|---|---|---|
| Example 7 | N-methyl-2-pyrrolidone | Partially exfoliated graphite | 6 | 19,500 | 0.01 | 0.01 | 1.7 | 15 | 13.3 | 75 |
| Example 8 | N-methyl-2-pyrrolidone | Partially exfoliated graphite | 6 | 19,500 | 20 | 0.01 | 2.8 | 13 | 10.2 | 72 |

## Claims

1. A carbon material-containing dispersion liquid comprising a carbon material and a dispersion medium for the carbon material,
wherein a concentration of the carbon material in the carbon material-containing dispersion liquid is 0.01% by weight or more and 20% by weight or less, and
a light transmittance at a wavelength of 650 nm of a supernatant of the carbon material-containing dispersion liquid when the carbon material-containing dispersion liquid is left to stand at 25°C for 24 hours after preparation is 1% or more and 60% or less.

2. The carbon material-containing dispersion liquid according to claim 1, wherein the dispersion medium has a viscosity at 25°C of 0.89 mPa·s or more and 1.89 mPa·s or less.

3. The carbon material-containing dispersion liquid according to claim 1 or 2, wherein the dispersion medium is water or N-methyl-2-pyrrolidone.

4. The carbon material-containing dispersion liquid according to any one of claims 1 to 3, wherein the carbon material has a graphite structure, and has a structure in which graphite is partially exfoliated.

5. The carbon material-containing dispersion liquid according to any one of claims 1 to 4, wherein the carbon material has a mean particle diameter of 1 µm or more and 40 µm or less.

6. The carbon material-containing dispersion liquid according to any one of claims 1 to 5, wherein a ratio y/x of a methylene blue adsorption y (µmol/g) per 1 g of the carbon material that is determined based on a difference between an absorbance of a 10 mg/L methylene blue solution in methanol and an absorbance of a supernatant obtained by introduction of the carbon material into the methylene blue solution in methanol, followed by centrifugal separation, and a BET specific surface area x (m²/g) of the carbon material is 0.15 or more.

7. The carbon material-containing dispersion liquid according to any one of claims 1 to 6, wherein a peak intensity ratio D/G of a D band and G band in a Raman spectrum of the carbon material falls within a range of 0.05 or more and 0.8 or less.

8. The carbon material-containing dispersion liquid according to any one of claims 1 to 7, wherein a particle concentration of the carbon material when a 20 ppm solution of the carbon material in N-methyl-2-pyrrolidone is measured by a flow-type particle image analyzer is 10,000 particles/µL or more and 200,000 particles/µL or less.

9. The carbon material-containing dispersion liquid according to any one of claims 1 to 8, further comprising a dispersibility imparting agent composed of a polyvinyl acetal resin and/or a polyvinylidene fluoride resin.

10. The carbon material-containing dispersion liquid according to claim 9, wherein a ratio B/(A + B) where A represents a weight of the carbon material and B represents a weight of the dispersibility imparting agent falls within a range of 0.001 or more and 0.15 or less.

11. A slurry for electrode formation for use in forming an electrode of a nonaqueous electrolyte secondary battery, the slurry for electrode formation comprising:
the carbon material-containing dispersion liquid according to any one of claims 1 to 10;
an active material; and
a binder.

12. The slurry for electrode formation according to claim 11, further comprising a second carbon material, the second carbon material being a different carbon material from a first carbon material when the carbon material contained in the carbon material-containing dispersion liquid is set as the first carbon material, and lacking a structure in which graphite is partially exfoliated.

13. The slurry for electrode formation according to claim 11 or 12, wherein the second carbon material is at least one selected from the group consisting of graphene oxide, a particulate graphite compound, a fibrous graphite compound, and carbon black.

14. A method for producing an electrode for nonaqueous electrolyte secondary batteries, the method comprising:
a step of preparing the slurry for electrode formation according to any one of claims 11 to 13; and
a step of forming an electrode by applying the slurry for electrode formation on a collector foil substrate, and drying the slurry for electrode formation.
